# FASCICULE DE BREVET EUROPEEN

(11) **EP 3 390 494 B1**
(45) Date de publication et mention de la délivrance du brevet: **08.06.2022**
(21) Numéro de dépôt: 16826388.7
(22) Date de dépôt: 15.12.2016
(51) Int. Cl.: B32B 7/10, B32B 27/08, B32B 27/20, B32B 27/22, B32B 27/28, B32B 27/30, B32B 27/36, C08G 69/26, B32B 27/34, C08L 77/06

(54) **STRUCTURE BARRIÈRE A BASE DE COPOLYAMIDE MXDT/XT DE HAUTE TG**
AUS MXDT/XT-COPOLYAMID MIT EINEM HOHEN TG HERGESTELLTE SPERRSTRUKTUR
BARRIER STRUCTURE MADE FROM MXDT/XT COPOLYAMIDE WITH A HIGH TG

(30) Priorité: 18.12.2015 FR 1562815
(43) Date de publication de la demande: 24.10.2018
(73) Titulaire: Arkema France, 92700 Colombes (FR)
(72) Inventeur: BRIFFAUD, Thierry, 27300 Bernay (FR); CAPELOT, Mathieu, 27300 Bernay (FR); DUFAURE, Nicolas, 27300 Bernay (FR)
(86) Numéro de dépôt international: PCT/FR2016/053471
(87) Numéro de publication internationale: WO 2017/103504

(56) Documents cités:
- WO-A1-2015/159014
- US-A1- 2015 267 050

## Description

### Domaine de l'invention

La présente invention concerne une structure barrière à base de copolyamide MXDT/XT de haute Tg dépourvue de fibres de renfort. Cette structure peut être constituée d'une seule couche de ce polyphtalamide et d'au moins une couche d'un autre matériau.

Cette structure barrière est utile pour des objets destinés au stockage et/ou transport de fluides, tels que des bouteilles, réservoirs, conteneurs, tuyaux et récipients de toute sorte. Cette structure peut aussi se présenter sous forme de films avec lesquels on fait par exemple des emballages qui nécessitent des propriétés barrière à des fluides tels que des gaz. Tous ces objets présentent de bonnes propriétés barrière, c'est-à-dire très peu perméable aux fluides, notamment automobiles, en particulier aux carburants.

L'invention concerne aussi l'utilisation d'un copolyamide MXDT/XT de haute Tg pour la fabrication d'une structure multicouche comprenant au moins une couche barrière comprenant ledit copolyamide MXDT/XT.

L'invention concerne aussi l'utilisation de ces structures et de ces objets.

### L'art antérieur et le problème technique

Quel que soit le fluide transporté ou stocké dans des objets tels que des bouteilles, réservoirs, conteneurs, tuyaux et récipients de toute sorte, le matériau en contact direct avec le fluide ne doit pas être perméable à celui-ci, qu'il s'agisse d'un liquide ou d'un gaz.

Ainsi, dans le domaine de l'automobile, et des transports en général, la composition des carburants est en constante évolution, notamment pour des raisons écologiques, ce qui se traduit par l'arrivée progressive des bio-carburants sur le marché. Ces carburants sont plus agressifs. Par conséquent, il s'avère indispensable d'améliorer la qualité des pièces thermoplastiques en contact avec ces nouveaux carburants tels que les tuyaux de transport d'essence.

Pour des raisons de sécurité et de préservation de l'environnement les constructeurs d'automobiles imposent à ces tuyaux à la fois des caractéristiques mécaniques comme la résistance à l'éclatement et la flexibilité avec une bonne tenue aux chocs à froid (-40°C) ainsi qu'à température élevée (125°C), et également une très faible perméabilité aux hydrocarbures et à leurs additifs, en particulier les alcools comme le méthanol et l'éthanol. Ces tubes doivent aussi avoir une bonne tenue aux carburants et aux huiles de lubrification du moteur.

La demande WO 2014/064375 concerne une composition de ou pour un matériau composite thermoplastique avec une matrice en polyamide (PA) semi-cristallin de température de transition vitreuse Tg d'au moins 90°C et de température de fusion Tf inférieure ou égale à 280°C ainsi que des pièces mécaniques ou de structure à base dudit matériau, l'utilisation de la composition de l'invention pour des pièces de matériau composite pour des applications dans les domaines de : l'automobile, ferroviaire, marin, transport routier, de l'éolien, du sport, aéronautique et spatial, du bâtiment, des panneaux et des loisirs.

Cette composition peut être utilisée pour la fabrication de pièces mécaniques concernant des applications dans le domaine de l'automobile, mais il n'est pas fait mention dans cette demande de structure comprenant une couche barrière à un fluide, en particulier un carburant. Par ailleurs, cette composition comprend toujours des fibres renforts.

EP 1988113 décrit des compositions de moulage à base d'un copolyamide 10T/6T avec :
- 40 à 95% mol de 10T
- 5 à 40% de 6T.

EP 1988113 est silencieux sur les propriétés barrière de structures constituées d'une couche de ces compositions.

EP 1741553 décrit une structure multicouche comprenant deux couches ou plus comprenant au moins une couche (a) comprenant (A) un polyamide aliphatique et une couche (b) comprenant un polyamide semi-aromatique comprenant au moins 60% en mole de diamine aliphatique ayant de 9 à 13 atomes de carbone et au moins 50% en mole d'acide téréphtalique, la couche (b) étant la couche intérieure.

EP 1741553 est totalement silencieux sur les propriétés barrière d'une telle structure.

EP1860134 décrit une résine de polyamide semi-aromatique comprenant des unités acides dicarboxyliques dans lesquelles de 50 à 100% en moles des unités acides dicarboxyliques sont des unités acide dicarboxylique aromatique, et des unités diamines dans lesquelles de 60 à 100% des unités diamines sont des unités diamines aliphatiques ayant de 9 à 13 atomes de carbone, ledit polyamide semi-aromatique présentant un rapport de fins de chaînes amine/fins de chaînes acide supérieur ou égal à 6.

EP 1860134 exemplifie notamment des composés 9T/9'T (ou 8MT/9T) et montre que la résistance à l'alcool est réduite lorsque ledit rapport est inférieur à 6 et notamment de 4 ou moins.

La demande internationale WO 10/015786 concerne un copolyamide de formule A/10.T, dans laquelle :
A est choisi parmi un motif obtenu à partir d'un acide aminocarboxylique, un motif obtenu à partir d'un lactame et un motif répondant à la formule (diamine en Ca).(diacide (cyclo)aliphatique en Cb), avec a représentant le nombre d'atome de carbone de la diamine et b représentant le nombre d'atomes de carbone du diacide, a et b étant chacun compris entre 4 et 36 ;
caractérisé en ce qu'il présente un indice de polymolécularité, noté Ip inférieur ou égal à 3,5, mesuré par chromatographie de perméation de gel (en langue anglaise : Gel Permeation Chromatography).

WO 10/015786 est totalement silencieux sur les propriétés barrière d'une telle structure.

WO 2015/159014 décrit un procédé de fabrication d'un matériau thermoplastique comprenant au moins une étape de moulage par injection ou une étape de mise en œuvre par extrusion d'une composition de polyamides. Un très grand nombre de polyamides sont revendiqués et bien que la composition de polyamide puisse être utilisée pour fabriquer une structure monocouche ou multicouche, il n'est en aucune manière fait mention des propriétés barrière de la structure et notamment comprenant le copolyamide MXDT/XT.

Par ailleurs, ces polyamides restent encore à améliorer, notamment en termes de cristallinité, de cinétique de cristallisation en vue d'améliorer la tenue en température du copolyamide, de processabilité ou encore d'améliorer leurs propriétés de tenue au choc ainsi que leurs propriétés barrières.

Ainsi, il existe un réel besoin de trouver des polyphtalamides présentant des propriétés améliorées, notamment en termes de propriétés barrières.

### Brève description de l'invention

De façon surprenante, il a été trouvé que ces besoins sont atteints avec une structure comprenant au moins une couche barrière aux carburants comprenant un polyamide MXDT/XT, dans laquelle :
"MXDT" désigne une unité à motif amide correspondant au produit de condensation d'un mélange de xylylènediamines de métaxylylènediamine et de l'acide téréphtalique,
XT désigne une unité à motif amide correspondant au produit de condensation de X qui désigne les restes d'une diamine aliphatique, arylaliphatique, cycloaliphatique ou aromatique et T qui désigne l'acide téréphtalique,
MXDT est présent à un taux molaire allant de 5 à 45%, de préférence de 15 à 45%, plus préférentiellement de 20 à 45%, où MXD représente la m-xylylène diamine (MXD) et T l'acide téréphtalique,
XT est une unité à motif amide majoritaire présent à un taux molaire allant de 55 à 95%, de préférence de 55 à 85%, plus préférentiellement de 55 à 80%, où X est une diamine aliphatique linéaire en C9 à C18, de préférence en C9, C10, C11 et C12 et où T est l'acide téréphtalique,
ledit copolyamide présentant une température de fusion : 250°C < Tf ≤ 300°C telle que déterminée selon la norme ISO 11357-3 (2013),
ladite structure étant dépourvue de fibres de renfort.

Il a donc été trouvé que ces produits, originellement développés pour des applications composites en raison de leur compromis haute rigidité (haute Tg), bonne processabilité (relativement basse Tf), présentaient également une structure cristalline supérieure aux attentes et pouvait être utilisée en tant que couche barrière, c'est-à-dire très peu perméable aux fluides, notamment automobiles, en particulier aux carburants, dans une structure, notamment multicouche, pour le transport de fluide, bien que le rapport fins de chaîne amine/fins de chaînes acide soit en particulier inférieur à 5.

En d'autres termes, ladite structure est une structure barrière, notamment choisie parmi les bouteilles, réservoirs, conteneurs, tuyaux, récipients et films, comprenant au moins une couche barrière (1) comprenant un copolyamide MXDT/XT tel que défini ci-dessus.

La structure de l'invention peut être constituée d'une seule couche comprenant le polyamide MXDT/XT dépourvue de fibres de renfort) et d'au moins une couche d'un autre matériau, ladite au moins autre couche pouvant comprendre des fibres de renfort.

Dans la structure de l'invention la couche comprenant le polyamide MXDT/XT peut comprendre aussi d'autres polymères. A titre d'exemple de ces autres polymères on peut citer les polyamides, l'EVOH, le PPS, le PPO, le polycarbonate, l'ABS.

L'invention concerne aussi l'utilisation d'un copolyamide MXDT/XT de haute Tg pour la fabrication d'une structure multicouche, comprenant au moins une couche barrière aux carburants comprenant ledit copolyamide MXDT/XT.

L'invention concerne aussi des bouteilles, réservoirs, conteneurs, tuyaux et récipients de toute sorte fabriqués avec la structure précédente. Cette structure peut aussi se présenter sous forme de films avec lesquels on fait par exemple des emballages. Tous ces objets présentent de bonnes propriétés barrière.

L'invention concerne également ces objets ainsi que l'utilisation de ces structures et de ces objets.

### Description détaillée de l'invention

D'autres caractéristiques, aspects, objets et avantages de la présente invention apparaîtront encore plus clairement à la lecture de la description et des exemples qui suivent.

Selon un premier aspect de l'invention, l'invention porte sur une structure comprenant au moins une couche barrière aux carburants (1) comprenant un copolyamide MXDT/XT dans lequel :
MXDT est une unité à motif amide présent à un taux molaire allant de 5 à 45%, de préférence de 15 à 45%, plus préférentiellement de 20 à 45%, où MXD représente la m-xylylène diamine (MXD) et T l'acide téréphtalique,
XT est une unité à motif amide majoritaire présent à un taux molaire allant de 55 à 95%, de préférence de 55 à 85%, plus préférentiellement de 55 à 80%, où X est une diamine aliphatique linéaire en C9 à C18, de préférence en C9, C10, C11 et C12 et où T est l'acide téréphtalique,
ledit copolyamide présentant une température de fusion : 250°C < Tf ≤ 300°C telle que déterminée selon la norme ISO 11357-3 (2013), et
   - dans les unités MXDT et/ou XT, indépendamment l'une de l'autre, jusqu'à 30% en mole, par rapport à la quantité totale des diacides carboxyliques, l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
   - dans les unités MXDT et/ou XT, indépendamment l'une de l'autre, jusqu'à 30% en mole de la MXD et/ou selon le cas de X, par rapport à la quantité totale des diamines, peut être remplacée par d'autres diamines comprenant de 4 à 36 atomes de carbone, en particulier 6 à 12 atomes de carbone, et
   - dans le copolyamide, pas plus de 30% en mole, par rapport à la quantité totale des monomères, peut être formée par des lactames ou des acides aminocarboxyliques, et
   - à condition que la somme des monomères qui remplacent l'acide téréphtalique, la MXD et X ne dépasse pas une concentration de 30% en mole par rapport à la quantité totale des monomères utilisés dans le copolyamide et
   - à condition que la MXD ne soit pas totalement substituée,
ladite structure étant dépourvue de fibres de renfort, et dans laquelle une seconde couche (2) est présente, les couches (1) et (2) étant susceptibles d'adhérer l'une à l'autre, ladite couche (2) comprenant au moins un polyamide choisi parmi un polyamide aliphatique et un polyamide aromatique, en particulier un polyamide aliphatique et ladite couche barrière (1) est en contact avec le fluide.

Il est bien évident que quel que soit la substitution présente effectuée pour les diacides et/ou diamines, la proportion de MXDT et de XT reste dans les gammes de valeurs indiquées. Par exemple, MXDT, même lorsqu'il est substitué par un diacide et/ou une diamine est de toute manière présent à taux molaire d'au moins 5% ou d'au moins 15% ou d'au moins 20% dépendant de la gamme de valeur revendiquée.

De la même manière la borne supérieure de ces gammes de valeurs est conservée.

Avantageusement, ledit copolyamide présente un rapport : quantité de groupes de fins de chaîne amine/quantité de groupes de fins de chaîne acide < 5, lesdites quantité de groupes de fins de chaîne amine et quantité de groupes de fins de chaîne acide étant déterminées par potentiométrie.

Avantageusement, MXDT est présent à un taux molaire de 5 à 45% et XT est présent à un taux molaire de 55 à 95%.

Avantageusement, MXDT est présent à un taux molaire de 15 à 45% et XT est présent à un taux molaire de 55 à 85%.

Avantageusement, MXDT est présent à un taux molaire de 20 à 45% et XT est présent à un taux molaire de 55 à 80%.

MXD et/ou X peuvent être remplacés, indépendamment l'une de l'autre, jusqu'à 30% en mole par d'autres diamines ci-dessus définies, notamment par une diamine aliphatique, linéaire ou branchée, une diamine cycloaliphatique ou une diamine arylaromatique autre que la MXD.

A titre d'exemple, la diamine aliphatique linéaire ou branchée est choisie parmi la 1, 4-butanediamine, la 1,5-pentanediamine, la 2-methyl-1,5-pentanediamine (MPMD), la 1,6 hexanediamine, la 1,8-octanediamine (OMDA), la 1,9-nonanediamine (NMDA), la 2-méthyl-1,8-octane-diamine (MODA), la 2,2,4-triméthylhexamethylenediamine (TMHMD), la 2,4,4-triméthylhexamethylenediamine (TMHMD), la 5-méthyl-1,9-nonanediamine, 1,11-undécanediamine, la 2-butyl-2-éthyl-1,5-pentanediamine, la 1,12-dodécanediamine, la 1,13-tridécanediamine, la 1,14-tétradécanediamine, la 1,16-hexadécanediamine et la 1,18-octadécanediamine.

La diamine cycloaliphatique peut être choisie parmi la cyclo-hexanediamine, la 1,3-bis(aminomethyl)cyclohexane (BAC), la 1,4-bis(aminomethyl)cyclohexane (BAC), l'isophoronediamine, la norbornanedimethylamine, la 4,4'-diaminodicyclohexylméthane (PACM), le 2,2-(4,4'-diamino-dicyclohexyl)propane (PACP), et le 3,3'-diméthyl-4,4'-diaminodicyclohexyléethane (MACM).

T peut être remplacé jusqu'à 30% en mole par d'autres diacides carboxyliques ci-dessus définies, notamment par d'autres diacides carboxyliques aromatiques, aliphatiques ou cycloaliphatiques.

Les diacides carboxyliques aromatiques peuvent être choisis parmi l'acide naphthalenedicarboxylique (NDA) et l'acide isophtalique (IPS).

Les diacides carboxyliques aliphatiques peuvent être choisis parmi l'acide adipique, l'acide subérique, l'acide azélaïque, l'acide sébacique, l'acide undécanedioïque, l'acide dodécanedioïque, l'acide brassylique, l'acide tétradecanedioïque, l'acide pentadécanedioïque, l'acide hexadécanedioiïque, l'acide octadécanedioïque et des acides gras dimérisés.

Les diacides carboxyliques cycloaliphatiques peuvent être choisis parmi l'acide cis- and/or trans-cyclohexane-1,4-dicarboxylique et/ou l'acide cis- et/ou trans-cyclohexane-1,3-dicarboxylique (CHDA).

MXD et/ou X et/ou T peuvent être remplacés, indépendamment l'un de l'autre, jusqu'à 30% en mole par des lactames ou des acides aminocarboxyliques.

Les lactames et acides aminocarboxyliques peuvent être choisi parmi le caprolactame (CL), l'acide α,ω-aminocaproïque, l'acide α,ω-aminononanoïque, l'acide α,ωaminoundecanoïque (AUA), le lauryllactame (LL) et l'acide α,ω-aminododécanoïque (ADA).

30% en mole maximum, par rapport à la somme totale des monomère MXD, X et T, de remplacement que ce soit par une autre diamine, un autre diacide, un lactame ou un acide aminocarboxylique ou un mélange quelconque de ceux-ci est possible.

Avantageusement, 20% en mole maximum, par rapport à la somme totale des monomère MXD, X et T, de remplacement que ce soit par une autre diamine, un autre diacide, un lactame ou un acide aminocarboxylique ou un mélange quelconque de ceux-ci est possible.

Avantageusement, 10% en mole maximum, par rapport à la somme totale des monomère MXD, X et T, de remplacement que ce soit par une autre diamine, un autre diacide, un lactame ou un acide aminocarboxylique ou un mélange quelconque de ceux-ci est possible.

Avantageusement, X est une diamine en C9 à C18.

Avantageusement, X est une diamine en C9 à C18 et MXDT est présent à un taux molaire de 5 à 45% et XT est présent à un taux molaire de 55 à 95%.

Avantageusement, X est une diamine en C9 à C18 et MXDT est présent à un taux molaire de 15 à 45% et XT est présent à un taux molaire de 55 à 85%.

Avantageusement, X est une diamine en C9 à C18 et MXDT est présent à un taux molaire de 20 à 45% et XT est présent à un taux molaire de 55 à 80%.

Avantageusement, X est une diamine en C9, C10, C11, C12.

Avantageusement, X est une diamine en C9, C10, C11, C12 et MXDT est présent à un taux molaire de 5 à 45% et XT est présent à un taux molaire de 55 à 95%.

Avantageusement, X est une diamine en C9, C10, C11, C12 et MXDT est présent à un taux molaire de 15 à 45% et XT est présent à un taux molaire de 55 à 85%.

Avantageusement, X est une diamine en C9, C10, C11, C12 et MXDT est présent à un taux molaire de 20 à 45% et XT est présent à un taux molaire de 55 à 80%.

Avantageusement, X est une diamine en C9 et MXDT est présent à un taux molaire de 5 à 45% et XT est présent à un taux molaire de 55 à 95%.

Avantageusement, X est une diamine en C9 et MXDT est présent à un taux molaire de 15 à 45% et XT est présent à un taux molaire de 55 à 85%.

Avantageusement, X est une diamine en C9 et MXDT est présent à un taux molaire de 20 à 45% et XT est présent à un taux molaire de 55 à 80%.

Avantageusement, X est une diamine en C10 et MXDT est présent à un taux molaire de 5 à 45% et XT est présent à un taux molaire de 55 à 95%.

Avantageusement, X est une diamine en C10 et MXDT est présent à un taux molaire de 15 à 45% et XT est présent à un taux molaire de 55 à 85%.

Avantageusement, X est une diamine en C10 et MXDT est présent à un taux molaire de 20 à 45% et XT est présent à un taux molaire de 55 à 80%.

Avantageusement, X est une diamine en C11 et MXDT est présent à un taux molaire de 5 à 45% et XT est présent à un taux molaire de 55 à 95%.

Avantageusement, X est une diamine en C11 et MXDT est présent à un taux molaire de 15 à 45% et XT est présent à un taux molaire de 55 à 85%.

Avantageusement, X est une diamine en C11 et MXDT est présent à un taux molaire de 20 à 45% et XT est présent à un taux molaire de 55 à 80%.

Avantageusement, X est une diamine en C12 et MXDT est présent à un taux molaire de 5 à 45% et XT est présent à un taux molaire de 55 à 95%.

Avantageusement, X est une diamine en C12 et MXDT est présent à un taux molaire de 15 à 45% et XT est présent à un taux molaire de 55 à 85%.

Avantageusement, X est une diamine en C12 et MXDT est présent à un taux molaire de 20 à 45% et XT est présent à un taux molaire de 55 à 80%.

L'expression « fibres de renfort » ou « renfort fibreux » désigne un assemblage de fibres, courtes ou longues. Les fibres peuvent être continues, sous forme de renfort unidirectionnel (UD) ou multidirectionnel (2D, 3D), sous forme de tissus, de nappes, de bandes ou de tresses et peuvent également être coupées par exemple sous forme de non tissés (mats) ou sous forme de feutres.

L'expression « fibres de renfort » désigne notamment :
- les fibres minérales, notamment les fibres de carbone, ce qui inclut les fibres de nanotubes ou nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine (Al2O3) ; les fibres métallisées comme les fibres de verre métallisées et les fibres de carbone métallisées ou les mélanges des fibres précitées.
- les fibres polymériques ou de polymère, notamment :
   - les fibres de polymères thermodurcissables et plus particulièrement choisies parmi : les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde
   - les fibres de polymères thermoplastiques et plus particulièrement choisies parmi : le polyéthylène téréphtalate (PET), le polybutylène téréphtalate (PBT), les polyoléfines haute densité telles que le polyéthylène (PE), le polypropylène (PP) et les copolymères PET/PP, PVOH (polyvinyl alcool)
   - les fibres de polyamides répondant à l'une des formules : 6, 11, 12, 610, 612, 66, 4.6,
   - les fibres d'aramides (comme le Kevlar^{®}) et polyamides aromatiques tels que ceux répondant à l'une des formules : PPDT, MPD.I, PAA et PPA, avec PPD et MPD étant respectivement la p- et m-phénylène diamine, PAA étant les polyarylamides et PPA étant les polyphtalamides
   - les fibres de copolymères blocs de polyamide tel que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).
- ou les mélanges des fibres citées ci-haut.

Par conséquent, toutes les fibres de renfort ci-dessus définies sont exclues de la portée l'invention.

Avantageusement, la quantité de fin de chaîne amine est comprise de 5 µeq/g à 100 µeq/g, préférentiellement de 20 µeq/g à 80 µeq/g et encore plus préférentiellement entre 30 µeq/g à 60 µeq/g.

Avantageusement, la quantité de fin de chaîne acide est comprise de 5 µeq/g à 100 µeq/g, préférentiellement de 20 µeq/g à 80 µeq/g et encore plus préférentiellement entre 30 µeq/g à 60 µeq/g.

Dans un mode de réalisation avantageux, la présente invention concerne une structure telle que définie ci-dessus, dans laquelle ledit copolyamide ci-dessus défini présente une température de transition vitreuse Tg ≥ 125°C, déterminée selon la norme ISO 11357-2 :2013.

Dans un mode de réalisation avantageux, la présente invention concerne une structure telle que définie ci-dessus, dans laquelle X est la 1, 10 décanediamine.

Avantageusement, X est la 1, 10 décanediamine et MXDT est présent à un taux molaire de 5 à 45% et XT est présent à un taux molaire de 55 à 95%.

Avantageusement, X est la 1, 10 décanediamine et MXDT est présent à un taux molaire de 15 à 45% et XT est présent à un taux molaire de 55 à 85%.

Avantageusement, X est la 1, 10 décanediamine et MXDT est présent à un taux molaire de 20 à 45% et XT est présent à un taux molaire de 55 à 80%.

Dans un mode de réalisation avantageux, la présente invention concerne une structure telle que définie ci-dessus, dans laquelle aucun des monomères dudit copolyamide n'est substitué par une autre diamine, un autre diacide carboxylique ou un lactame.

La structure dans laquelle aucun des monomères n'est substitué est donc de formule MXDT/XT sans autre présence d'autre diamine, d'autre diacide carboxylique, de lactame ou d'acide aminocarboxylique.

Dans un mode de réalisation avantageux, la présente invention concerne une structure telle que définie ci-dessus, dans laquelle ladite couche (1) comprend un modifiant choc et/ou un modifiant de type core-shell.

Par l'expression « modifiant choc », il faut entendre un polymère à base polyoléfine présentant un module de flexion inférieur à 100 MPa mesuré selon la norme ISO 178 :2010 et de Tg inférieure à 0°C (mesurée selon la norme 11357-2 :2013 au niveau du point d'inflexion du thermogramme DSC), en particulier une polyoléfine, couplée ou non avec un PEBA (polyéther-bloc-amide) ayant un module de flexion < 200 MPa.

Dans ce mode de réalisation avantageux, ce polymère à base de polyoléfine est donc présent dans le copolyamide constituant la couche (1).

La polyoléfine du modifiant choc peut être fonctionnalisée ou non fonctionnalisée ou être un mélange d'au moins une fonctionnalisée et/ou d'au moins une non fonctionnalisée.

Notamment, une partie ou la totalité des polyoléfines porte une fonction choisie parmi les fonctions acide carboxylique, anhydride carboxylique et époxyde, et est en particulier choisie parmi un copolymère d'éthylène et de propylène à caractère élastomère (EPR), un copolymère éthylène-propylène-diène à caractère élastomère (EPDM) et un copolymère éthylène/(meth)acrylate d'alkyle, un copolymère éthylène-alcène supérieur, en particulier un copolymère étylène-octène, un terpolymère éthylène-acrylate d'alkyle-anhydride maléique.

Avantageusement, le modifiant choc est choisi parmi le Fusabond F493, un Lotader^{®}, en particulier le Lotader 5500 ou le Lotader 7500, l'Escor VA1801 ou VA1803, l'Excelsior E1040, l'Amplify GR216, le Tafmer MH5020 ou l'Orevac IM800, ou un mélange de ceux-ci, dans ce cas ils sont dans un rapport allant de 0,1/99,9 à 99,9/0,1, préférentiellement 1/2 à 2/1 lorsqu'ils sont en mélange de deux.

A titre d'exemple, le modifiant choc est choisi parmi les mélanges suivants : F493/Lotader^{®}, en particulier F493/Lotader^{®} 5500 ou F493/Lotader^{®} 7500.

L'expression « modifiant de type core-shell » est également désignée « copolymère de type cœur-écorce ».

Le « modifiant de type core-shell » se présente sous la forme de fines particules ayant un cœur en élastomère et au moins une écorce thermoplastique, la taille des particules est en général inférieure au µm et avantageusement comprise entre 150 et 500 nm.

Le « modifiant de type core-shell » possède une base acrylique ou butadiène contrairement au modifiant choc qui possède une base polyoléfine.

A titre d'exemple de cœur on peut citer les homopolymères de l'isoprène ou du butadiène, les copolymères de l'isoprène avec au plus 30% en moles d'un monomère vinylique et les copolymères du butadiène avec au plus 30% en moles d'un monomère vinylique. Le monomère vinylique peut être le styrène, un alkylstyrène, l'acrylonitrile ou un (meth)acrylate d'alkyle. Une autre famille de cœur est constituée par les homopolymères d'un (meth)acrylate d'alkyle et les copolymères d'un (meth)acrylate d'alkyle avec au plus 30% en moles d'un monomère vinylique. Le (meth)acrylate d'alkyle est avantageusement l'acrylate de butyle. Le monomère vinylique peut être le styrène, un alkylstyrène, l'acrylonitrile, le butadiène ou l'isoprène. Le cœur du copolymère (A) peut être réticulé en tout ou partie. Il suffit d'ajouter des monomères au moins difonctionnels au cours de la préparation du cœur, ces monomères peuvent être choisis parmi les esters poly(meth)acryliques de polyols tels que le di(meth)acrylate de butylène et le trimethylol propane trimethacrylate. D'autres monomères difonctionnels sont par exemple le divinylbenzène, le trivinylbenzène, l'acrylate de vinyle et le methacrylate de vinyle. On peut aussi réticuler le cœur en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maléique, l'acide (meth)acrylique et le méthacrylate de glycidyle.

L'écorce ou les écorces sont des homopolymères du styrène, d'un alkylstyrène ou du méthacrylate de méthyle ou des copolymères comprenant au moins 70% en moles de l'un de ces monomères précédents et au moins un comonomère choisi parmi les autres monomères précédents, l'acétate de vinyle et l'acrylonitrile. L'écorce peut être fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maléique, l'acide (meth)acrylique et le méthacrylate de glycidyle. A titre d'exemple on peut citer des copolymères cœur - écorce (A) ayant une écorce en polystyrène et des copolymères cœur - écorce (A) ayant une écorce en PMMA. Il existe aussi des copolymères cœur - écorce (A) ayant deux écorces, l'une en polystyrène et l'autre à l'extérieur en PMMA. Des exemples de copolymère (A) ainsi que leur procédé de préparation sont décrits dans les brevets suivants : US 4 180 494, US 3 808 180, US 4096 202, US 4 260 693, US 3 287 443, US 3 657 391, US 4 299 928, US 3 985 704.

Le « modifiant de type core-shell est donc différent de la polyoléfine du modifiant choc et notamment par ce que le modifiant choc réagit avec la matrice de polyamide alors que le core-shell ne réagit pas avec celle-ci car le cœur de ce dernier n'est susceptible de réagir qu'avec l'écorce de celui-ci.

Avantageusement, le modifiant choc et/ou le modifiant de type core-shell est présent de 5 à 35% en poids par rapport au poids de tous les constituants du copolyamide de la couche (1), en particulier de 5 à 25%, et plus particulièrement de 5 à 15%.

Avantageusement, l'invention porte donc sur une structure telle que définie ci-dessus comprenant au moins une couche (1) comprenant un copolyamide MPMD.T / X.T tel que défini ci-dessus et comprenant un modifiant choc et/ou un modifiant de type core-shell en proportion de 5 à 35% en poids par rapport au poids de tous les constituants du copolyamide, en particulier de 5 à 25%, et plus particulièrement de 5 à 15%.

Avantageusement, dans les structures comprenant un modifiant choc et/ou un modifiant de type core-shell, X est la 1,10-décanediamine.

Dans un mode de réalisation avantageux, la présente invention concerne une structure telle que définie ci-dessus, dans laquelle ladite couche (1) comprend un stabilisant choisi parmi un stabilisant organique, un stabilisant minéral, en particulier un stabilisant à base de cuivre, et un mélange de ceux-ci.

L'expression « stabilisant organique » ou plus généralement une « combinaison de stabilisants organiques », désigne un antioxydant primaire de type phénol, un antioxydant secondaire de type phosphite et voire éventuellement d'autres stabilisants comme un HALS, ce qui signifie Hindered Amine Light Stabiliser ou stabilisant lumière de type amine encombrée (par exemple le Tinuvin 770 de la société Ciba), un anti-UV (par exemple le Tinuvin 312 de la société Ciba), un stabilisant phénolique ou à base de phosphore. On peut également utiliser des antioxydants de type amine tel le Naugard 445 de la société Crompton ou encore des stabilisants polyfonctionnels tel le Nylostab S-EED de la société Clariant.

Le stabilisant organique présent au sein de la couche (1) peut être choisi, sans que cette liste soit restrictive, parmi :
- les anti-oxydants phénoliques, par exemple l'Irganox 245, l'Irganox 1010, l'Irganox 1098 de la société Ciba, l'Irganox MD1024 de la société Ciba, le Lowinox 44B25 de la société Great Lakes, l'ADK Stab AO-80 de la société Adeka Palmarole.
- les stabilisants à base de phosphore, comme les phosphites, par exemple l'Irgafos 168 de la société Ciba,
- un absorbeur UV, tel le Tinuvin 312 de la société Ciba,
- un HALS, comme précédemment mentionné,
- un stabilisant de type amine, tel le Naugard 445 de la société Crompton, ou encore de type amine encombrée tel le Tinuvin 770 de la société Ciba,
- un stabilisant polyfonctionnel tel le Nylostab S-EED de la société Clariant.

On peut bien évidemment envisager un mélange de deux, ou plus, de ces stabilisants organiques.

De préférence, le stabilisant organique est présent au sein du copolyamide de la couche (1) de la structure en une teneur comprise entre 0,3 et 3% en poids par rapport au poids total des constituants du copolyamide.

L'expression « stabilisant minéral » désigne un stabilisant à base de cuivre. A titre d'exemple de tels stabilisants minéraux, on peut citer les halogénures et les acétates de cuivre. Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

Ces stabilisants minéraux sont plus particulièrement employés, lorsque les structures doivent avoir une résistance thermique améliorée à long terme dans l'air chaud, notamment pour des températures supérieures ou égales à 100-120°C, car ils tendent à empêcher les coupures de chaînes polymériques.

Plus particulièrement, par stabilisant à base de cuivre, on entend un composé comprenant au moins un atome de cuivre, notamment sous forme ionique, ionisable, par exemple sous forme de complexe.

Le stabilisant à base de cuivre présent au sein de la couche (1) peut être choisi parmi le chlorure cuivreux, le chlorure cuivrique, le bromure cuivreux, le bromure cuivrique, l'iodure cuivreux, l'iodure cuivrique, l'acétate cuivreux et l'acétate cuivrique. On peut citer les halogénures, les acétates d'autres métaux tels l'argent en association avec le stabilisant à base de cuivre. Ces composés à base de cuivre sont typiquement associés à des halogénures de métaux alcalins. Un exemple bien connu est le mélange de Cul et KI, où le ratio Cul:KI est typiquement compris entre 1:5 à 1:15. Un exemple d'un tel stabilisant est le Polyadd P201 de la société Ciba.

On trouvera de plus amples détails sur les stabilisants à base de cuivre dans le brevet US 2,705,227. Plus récemment, sont apparus des stabilisants à base de cuivre tel les cuivres complexés comme les Bruggolen H3336, H3337, H3373 de la société Brüggemann.

Avantageusement, le stabilisant à base de cuivre est choisi parmi les halogénures de cuivre, l'acétate de cuivre, les halogénures de cuivre ou l'acétate de cuivre en mélange avec au moins un halogénure de métal alcalin, et leurs mélanges, de préférence les mélanges d'iodure de cuivre et d'iodure de potassium (CuI/KI).

De préférence, le stabilisant à base de cuivre est présent dans la couche (1) de la structure en une teneur comprise entre 0,05 et 1,5% en poids par rapport au poids total des constituants du copolyamide.

De préférence, la couche (1) ne comprend en outre aucun autre métal de transition.

Avantageusement, l'invention porte donc sur une structure telle que définie ci-dessus comprenant au moins une couche (1) comprenant un copolyamide MXDT/XT tel que défini ci-dessus et comprenant un modifiant choc et/ou un modifiant de type core-shell en proportion de 5 à 35% en poids par rapport au poids de tous les constituants du copolyamide et un stabilisant organique.

Avantageusement, l'invention porte donc sur une structure telle que définie ci-dessus comprenant au moins une couche (1) comprenant un copolyamide MXDT/XT tel que défini ci-dessus et comprenant un modifiant choc et/ou un modifiant de type core-shell en proportion de 5 à 35% en poids par rapport au poids de tous les constituants du copolyamide et un stabilisant minéral, en particulier un stabilisant à base de cuivre.

Avantageusement, l'invention porte donc sur une structure telle que définie ci-dessus comprenant au moins une couche (1) comprenant un copolyamide MXDT/XT tel que défini ci-dessus et comprenant un modifiant choc et/ou un modifiant de type core-shell en proportion de 5 à 35% en poids par rapport au poids de tous les constituants du copolyamide et un mélange de stabilisant organique et de stabilisant minéral, en particulier un stabilisant à base de cuivre.

Avantageusement, l'invention porte donc sur une structure telle que définie ci-dessus comprenant au moins une couche (1) comprenant un copolyamide MXDT/XT tel que défini ci-dessus et comprenant un modifiant choc et/ou un modifiant de type core-shell en proportion de 5 à 25% en poids par rapport au poids de tous les constituants du copolyamide et un stabilisant organique.

Avantageusement, l'invention porte donc sur une structure telle que définie ci-dessus comprenant au moins une couche (1) comprenant un copolyamide MXDT/XT tel que défini ci-dessus et comprenant un modifiant choc et/ou un modifiant de type core-shell en proportion de 5 à 25% en poids par rapport au poids de tous les constituants du copolyamide et un stabilisant minéral, en particulier un stabilisant à base de cuivre.

Avantageusement, l'invention porte donc sur une structure telle que définie ci-dessus comprenant au moins une couche (1) comprenant un copolyamide MXDT/XT tel que défini ci-dessus et comprenant un modifiant choc et/ou un modifiant de type core-shell en proportion de 5 à 25% en poids par rapport au poids de tous les constituants du copolyamide et un mélange de stabilisant organique et de stabilisant minéral, en particulier un stabilisant à base de cuivre.

Avantageusement, dans les structures comprenant un modifiant choc et/ou un modifiant de type core-shell, et un stabilisant X est la 1,10-décanediamine.

Dans un mode de réalisation avantageux, la présente invention concerne une structure telle que définie ci-dessus, dans laquelle ladite couche (1) comprend une charge antistatique choisie parmi le noir de carbone, le graphite, des fibres de carbone, des nanotubes de carbone, en particulier noir de carbone et nanotubes de carbone.

Dans un mode de réalisation avantageux, la présente invention concerne une structure telle que définie ci-dessus, dans laquelle ladite couche (1) peut comprendre au moins un additif choisi parmi un antioxydant, un stabilisant à la chaleur, un absorbeur d'UV, un stabilisant à la lumière, un lubrifiant, une charge inorganique, un agent ignifugeant, un agent nucléant, un plastifiant et un colorant.

Les fibres de renfort sont exclues des additifs et en particulier le terme « charge inorganique » exclut les fibres de renfort.

Avantageusement, le ou les additifs sont présent dans la couche (1) en proportion en poids de 1 à 20%, en particulier de 5 à 15%, par rapport au poids total des constituants de la couche (1).

L'expression « étant susceptibles d'adhérer l'une à l'autre » signifie que si la structure est constituée de deux couches, les couches (1) et (2) adhère l'une à l'autre, au moins partiellement.

Si la structure comprend au moins une troisième couche, ladite troisième couche peut être placée entre la couche (1) et la couche (2), auquel cas les couches (1) et (2) n'adhèrent pas entre elles mais par contre les couches (1) et (3) adhèrent entre elles ainsi que les couches (3) et (2).

Avantageusement, la structure est constituée de deux couches (1) et (2) adhérant entre elles.

Avantageusement, ledit polyamide aliphatique est issu de la polycondensation d'au moins un lactame ou d'au moins un acide aminocarboxylique, ou d'une diamine et d'un diacide carboxylique ou d'un mélange de ceux-ci, la diamine étant choisi parmi une diamine aliphatique, une diamine cycloaliphatique et le diacide carboxylique étant choisi parmi un diacide aliphatique et un diacide cycloaliphatique, ou un mélange de ceux-ci.

L'acide aminocarboxylique peut être choisi parmi l'acide 9-aminononanoïque, l'acide 10-aminodécanoïque, l'acide 12-aminododécanoïque et l'acide 11- aminoundécanoïque ainsi que ses dérivés, notamment l'acide N-heptyl-11-aminoundécanoïque, avantageusement l'acide 12-aminododécanoïque et l'acide 11- aminoundécanoïque.

Le lactame peut être choisi parmi la pyrrolidinone, la piperidinone, le caprolactame, l'énantholactame, le caprylolactame, le pelargolactame, le décanolactame, l'undécanolactame, et le laurolactame, avantageusement l'undécanolactame, et le laurolactame.

Lorsque la diamine est aliphatique et linéaire, elle est de formule H₂N-(CH₂)ₐ-NH₂. Le diacide peut être aliphatique (notamment aliphatique linéaire), cycloaliphatique ou aromatique.

Préférentiellement, lorsque la diamine en est linéaire et aliphatique, elle est choisie parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tétradécanediamine (a=14), l'hexadécanediamine (a=16), l'octadécanediamine (a=18), l'octadécanediamine (a=18), l'eicosanediamine (a=20), la docosanediamine (a=22) et les diamines obtenues à partir d'acides gras dimérisés.

Lorsque la diamine est cycloaliphatique, elle est choisie de préférence parmi celles comprenant deux cycles. Elles répondent notamment à la formule générale suivante : 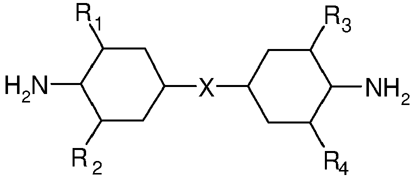 dans laquelle :
- R₁, R₂, R₃ et R₄ représentent indépendamment un groupe choisi parmi un atome d'hydrogène ou un alkyle de 1 à 6 atomes de carbone et
- X représente soit une liaison simple, soit un groupement divalent constitué:
   - d'une chaîne aliphatique linéaire ou ramifiée comprenant de 1 à 10 atomes de carbone, éventuellement substituée par des groupements cycloaliphatiques ou aromatiques de 6 à 8 atomes de carbone,
   - d'un groupement cycloaliphatique de 6 à 12 atomes de carbone.

Plus préférentiellement, la diamine cycloaliphatique Ca du polyamide est choisie parmi la bis(3,5-dialkyl-4-aminocyclohexyl)méthane, la bis(3,5-dialkyl-4-aminocyclohexyl) éthane, la bis(3,5-dialkyl-4-aminocyclo-hexyl)propane, la bis(3,5- dialkyl-4-amino cyclo-hexyl)butane, la bis-(3-méthyl-4-amino cyclohexyl)-méthane (noté BMACM, MACM ou B), la p- bis(aminocyclohexyl)-methane (PACM) et l'isopropylidenedi(cyclohexylamine) (PACP).

Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Le diacide carboxylique aliphatique et linéaire est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanoïque (b=18), l'acide octadécènedioïque (b=18), l'acide eicosanedioïque (b=20), l'acide docosanedioïque (b=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornylméthane, cyclohexylméthane, dicyclohexylméthane, dicyclohexylpropane, di(méthylcyclohexyl) propane.

Le polyamide de la couche (2) peut être un homopolyamide ou un copolyamide.

La nomenclature utilisée pour définir les polyamides est décrite dans la norme ISO 16396-1 : 2015 « Plastiques -- Matériaux polyamides (PA) pour moulage et extrusion -- Partie 1: Système de désignation, marquage des produits et base de spécification ».

Avantageusement, le polyamide de la couche (2) est choisi parmi le PA11, le PA12, le PA1010, le PA1012, le PA610 et le PA612.

Dans un mode de réalisation avantageux, la présente invention concerne une structure telle que définie ci-dessus, dans laquelle un autre polyamide, différent de celui de la couche (2) peut être présent dans la couche (2).

Ledit autre polyamide est tel que défini ci-dessus dans la couche (2) à condition qu'il soit différent de celui de la couche (2).

Avantageusement, un plastifiant est présent dans la couche (2).

Avantageusement, le plastifiant de la couche (2) est présent de 1 à 20%, en particulier de 5 à 15% en poids par rapport au poids de tous les constituants du copolyamide de la couche (2).

Dans un mode de réalisation avantageux, la présente invention concerne une structure telle que définie ci-dessus, dans laquelle un modifiant choc et/ou un modifiant de type core-shell est présent dans la couche (2).

Le modifiant choc et/ou le modifiant de type core-shell sont tels que définis ci-dessus.

Avantageusement, le modifiant choc et/ou le modifiant de type core-shell est présent de 5 à 35% en poids par rapport au poids de tous les constituants du copolyamide de la couche (2), en particulier de 5 à 25%, et plus particulièrement de 5 à 15%.

Dans un mode de réalisation avantageux, la présente invention concerne une structure telle que définie ci-dessus, dans laquelle une seconde couche (2) est présente, les couches (1) et (2) adhérant l'une à l'autre, la couche (1) étant l'une de celles ci-dessus définies, et la couche (2) comprenant un autre polyamide ou non, la couche (2) comprenant un plastifiant de 1 à 20% en poids et un modifiant choc et/ou un modifiant de type core-shell en proportion de 5 à 35% en poids par rapport au poids de tous les constituants du copolyamide de la couche (2).

Dans un mode de réalisation avantageux, la présente invention concerne une structure telle que définie ci-dessus, dans laquelle une seconde couche (2) est présente, les couches (1) et (2) adhérant l'une à l'autre, la couche (1) étant l'une de celles ci-dessus définies, et la couche (2) comprenant un autre polyamide ou non, la couche (2) comprenant un plastifiant de 1 à 20% en poids et un modifiant choc et/ou un modifiant de type core-shell en proportion de 5 à 25% en poids par rapport au poids de tous les constituants du copolyamide de la couche (2).

Dans un mode de réalisation avantageux, la présente invention concerne une structure telle que définie ci-dessus, dans laquelle une seconde couche (2) est présente, les couches (1) et (2) adhérant l'une à l'autre, la couche (1) étant l'une de celles ci-dessus définies, et la couche (2) comprenant un autre polyamide ou non, la couche (2) comprenant un plastifiant de 5 à 15% en poids et un modifiant choc et/ou un modifiant de type core-shell en proportion de 5 à 35% en poids par rapport au poids de tous les constituants du copolyamide de la couche (2).

Dans un mode de réalisation avantageux, la présente invention concerne une structure telle que définie ci-dessus, dans laquelle une seconde couche (2) est présente, les couches (1) et (2) adhérant l'une à l'autre, la couche (1) étant l'une de celles ci-dessus définies, et la couche (2) comprenant un autre polyamide ou non, la couche (2) comprenant un plastifiant de 5 à 15% en poids et un modifiant choc et/ou un modifiant de type core-shell en proportion de 5 à 25% en poids par rapport au poids de tous les constituants du copolyamide de la couche (2).

Dans un mode de réalisation avantageux, la présente invention concerne une structure telle que définie ci-dessus, dans laquelle une seconde couche (2) est présente, dans laquelle ladite couche (2) comprend un stabilisant choisi parmi un stabilisant organique, un stabilisant minéral, en particulier un stabilisant à base de cuivre, et un mélange de ceux-ci.

Les stabilisants sont tels que définis ci-dessus.

Dans un mode de réalisation avantageux, la présente invention concerne une structure telle que définie ci-dessus, dans laquelle une seconde couche (2) est présente, dans laquelle la couche (1) comprend un stabilisant organique et la couche (2) comprend un stabilisant minéral, en particulier un stabilisant à base de cuivre.

Dans un mode de réalisation avantageux, la présente invention concerne une structure telle que définie ci-dessus, dans laquelle une seconde couche (2) est présente, dans laquelle la couche (1) comprend un stabilisant minéral, en particulier un stabilisant à base de cuivre et la couche (2) comprend un stabilisant organique.

Dans un mode de réalisation avantageux, la présente invention concerne une structure telle que définie ci-dessus, dans laquelle une seconde couche (2) est présente, dans laquelle ladite couche (2) comprend une charge antistatique choisie parmi le noir de carbone, le graphite, des fibres de carbone, des nanotubes de carbone, en particulier noir de carbone et nanotubes de carbone.

Dans un mode de réalisation avantageux, la présente invention concerne une structure telle que définie ci-dessus, dans laquelle une seconde couche (2) est présente, dans laquelle ladite couche (2) peut comprendre au moins un additif choisi parmi un antioxydant, un stabilisant à la chaleur, un absorbeur d'UV, un stabilisant à la lumière, un lubrifiant, une charge inorganique, un agent ignifugeant, un agent nucléant et un colorant.

Dans un mode de réalisation avantageux, la présente invention concerne une structure telle que définie ci-dessus, dans laquelle la couche (1) est une couche barrière, notamment à un fluide, ledit fluide étant un carburant, ledit carburant étant une essence, en particulier une bio essence (mélange d'essence et d'alcool, notamment de méthanol ou d'éthanol), ou du diesel en particulier le bio-diesel, ladite couche barrière (1) est en contact avec le fluide.

La structure définie dans ce mode de réalisation comprend donc au moins une couche (1) et une seconde couche (2) et est donc bicouche (1) et (2) mais on ne sortirait pas du cadre de l'invention si la structure comprenait d'autres couches.

Avantageusement, la structure est constituée de deux couches (1) et (2) et la couche (1) est la couche barrière.

Par conséquent, dans le cas où la structure comprend deux couches, elle comprend de l'extérieur vers l'intérieur les couches suivantes : (2)//(1).

Dans le cas où la structure comprend au moins une autre couche, cette dernière ne peut être en contact avec le fluide.

Dans un mode de réalisation avantageux, la présente invention concerne une structure comprenant au moins une couche (1) telle que définie ci-dessus, et une seconde couche (2) telle que définie ci-dessus, les couches (1) et (2) étant susceptibles d'adhérer l'une à l'autre,
comprenant de plus une couche (3), la couche (3) étant identique à ou différente de la couche (1).

Dans ce mode de réalisation, la structure comprend ou est constituée des couches suivantes, de l'extérieur vers l'intérieur : (3)//(2)//(1) ou (2)//(3)//(1).

Avantageusement, la couche (3) est différente de la couche (1) et est une couche de liaison et la structure comprend de l'extérieur vers l'intérieur les couches suivantes: (2)//(3)//(1), la couche (1) étant en contact avec le fluide.

Avantageusement, dans la structure (2)//(3)//(1), la couche (1) a une épaisseur de 100 à 300µm, notamment de 200 à 300µm, en particulier 250µm, la couche (3) a une épaisseur de 50 à 100µm ou de 100 à 200µm, en particulier 150µm et la couche (2) a une épaisseur de 50 à 800µm, notamment de 50 à 200µm ou de 500 à 700µm.

La couche de liaison peut être un mélange d'au moins un polyamide présentant un nombre moyen d'atomes de carbone par atome d'azote noté compris entre 4 et 8,5, avantageusement entre 4 et 7 ; au moins un polyamide présentant une température de fusion supérieure ou égale à 180°C et un nombre moyen d'atomes de carbone par atome d'azote compris entre 7 et 10, avantageusement entre 7,5 et 9,5 et au moins un polyamide présentant un nombre moyen d'atomes de carbone par atome d'azote compris entre 9 et 18, avantageusement entre 10 et 18, notamment tels que définis dans le document WO 09/122060.

Dans un mode de réalisation avantageux, la présente invention concerne une structure comprenant au moins une couche (1) telle que définie ci-dessus, une seconde couche (2) telle que définie ci-dessus, les couches (1) et (2) étant susceptibles d'adhérer l'une à l'autre et une couche (3), la couche (3) étant identique à ou différente de la couche (1),
ladite structure comprenant de plus au moins une autre couche (4), la couche (1) étant en contact avec le fluide.

Avantageusement, la couche (4) est une couche d'EVOH.

Dans un mode de réalisation avantageux, la présente invention concerne une structure comprenant au moins une couche (1) telle que définie ci-dessus, et une seconde couche (2) telle que définie ci-dessus, les couches (1) et (2) étant susceptibles d'adhérer l'une à l'autre et une couche (3), la couche (3) étant identique à ou différente de la couche (1) et au moins une autre couche (4), la couche (1) étant en contact avec le fluide, ladite structure comprenant de l'extérieur vers l'intérieur les couches suivantes: (2)//(4)//(3)//(1), la couche (1) étant en contact avec le fluide.

Avantageusement, dans la structure (2)//(4)//(3)//(1), la couche (3) est une couche de liant telle que ci-dessus définie.

Avantageusement, dans la structure (2)//(4)//(3)//(1), la couche (4) est une couche d'EVOH telle que ci-dessus définie.

Avantageusement, dans la structure (2)//(4)//(3)//(1), la couche (3) est une couche de liant telle que ci-dessus définie et la couche (4) est une couche d'EVOH telle que ci-dessus définie.

Avantageusement, la structure est constituée des couches (2)//(4)//(3)//(1) telle que ci-dessus définies.

Dans un mode de réalisation avantageux, la présente invention concerne une structure comprenant au moins une couche (1) telle que définie ci-dessus, une seconde couche (2) telle que définie ci-dessus, les couches (1) et (2) étant susceptibles d'adhérer l'une à l'autre, une couche (3), la couche (3) étant identique à ou différente de la couche (1), au moins une autre couche (4), la couche (1) étant en contact avec le fluide, et comprenant de l'extérieur vers l'intérieur les couches suivantes: (2)//(4)//(3)//(1), la couche (1) étant en contact avec le fluide,

Ladite structure comprenant de plus, une couche de liaison (3'), identique à ou différente de la couche de liaison (3) est présente.

La couche (3') est donc un liant du même type que celui défini ci-dessus pour la couche (3) mais de composition identique ou différente.

Avantageusement, ladite structure comprenant de plus une couche de liaison (3'), comprend de l'extérieur vers l'intérieur les couches suivantes: (2)//(3')//(4)//(3)//(1), la couche (1) étant en contact avec le fluide.

Avantageusement, la couche (1) a une épaisseur de 100 à 200µm, en particulier 150µm, la couche (2) a une épaisseur de 100 à 200µm, en particulier 150µm, la couche (3) a une épaisseur de 200 à 400µm, en particulier 300µm, la couche (3') a une épaisseur de 200 à 400µm, en particulier 300µm et la couche (4) de 50µm à 150µm, en particulier 100 µm.

Selon un autre aspect, la présente invention concerne des bouteilles, réservoirs, conteneurs, tuyaux et récipients fabriqués avec l'une des structures telles que définies ci-dessus.

Selon un autre aspect, la présente invention concerne des emballages constitués des films fabriqués avec l'une des structures telles que définies ci-dessus.

Selon un autre aspect, la présente invention concerne l'utilisation d'un copolyamide MXDT/XT dans lequel :
MXDT est une unité à motif amide présent à un taux molaire allant de 5 à 45%, de préférence de 15 à 45%, plus préférentiellement de 20 à 45%, où MXD représente la m-xylylène diamine (MXD) et T l'acide téréphtalique,
XT est une unité à motif amide majoritaire présent à un taux molaire allant de 55 à 95%, de préférence de 55 à 85%, plus préférentiellement de 55 à 80%, où X est une diamine aliphatique linéaire en C9 à C18, de préférence en C9, C10, C11 et C12 et où T est l'acide téréphtalique,
ledit copolyamide présentant une température de fusion : 250°C < T_{f} ≤ 300°C telle que déterminée selon la norme ISO 11357-3 (2013),
   - dans les unités MXDT et/ou XT, indépendamment l'une de l'autre, jusqu'à 30% en mole, par rapport à la quantité totale des diacides carboxyliques, l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
   - dans les unités MXDT et/ou XT, indépendamment l'une de l'autre, jusqu'à 30% en mole de la MXD et/ou selon le cas de X, par rapport à la quantité totale des diamines, peut être remplacée par d'autres diamines comprenant de 4 à 36 atomes de carbone, en particulier 6 à 12 atomes de carbone, et
   - dans le copolyamide, pas plus de 30% en mole, par rapport à la quantité totale des monomères, peut être formée par des lactames ou des acides aminocarboxyliques, et
   - à condition que la somme des monomères qui remplacent l'acide téréphtalique, la MXD et X ne dépasse pas une concentration de 30% en mole par rapport à la quantité totale des monomères utilisés dans le copolyamide, et
   - à condition que la MXD ne soit pas totalement substituée,
pour la fabrication d'une structure, notamment multicouche, comprenant au moins une couche barrière aux carburants (1) comprenant ledit copolyamide MXDT/XT,
ladite structure étant dépourvue de fibres de renfort.

Toutes les caractéristiques et tous les modes de réalisation définis ci-dessus pour les structures peuvent s'appliquer pour l'utilisation ci-dessus définie.

### Exemples :

### 1) Préparation d'un MXDT/10T et de polyamides comparatifs

Dans un réacteur autoclave de 14 litres, on introduit 5 kg des matières premières suivantes :
- 500 g d'eau,
- la ou les diamines,
- l'aminoacide (éventuellement),
- le ou les diacides
- le régulateur de chaîne monofonctionnel : acide benzoïque ou acide stéarique en quantité adaptée à la viscosité visée
- 35 g d'hypophosphite de sodium en solution,
- 0,1 g d'un antimousse WACKER AK1000 (société Wacker Silicones).

La nature et rapports molaires des motifs et structures moléculaires des polyamides (par essai référencé) sont donnés au tableau 1 ci-dessous.

Le réacteur fermé est purgé de son oxygène résiduel puis chauffé à une température de 230°C par rapport à la matière introduite. Après 30 minutes d'agitation dans ces conditions, la vapeur sous pression qui s'est formée dans le réacteur est détendu progressivement en 60 minutes, tout en augmentant progressivement la température matière de manière à ce qu'elle s'établisse à Tf + 10°C à pression atmosphérique. La polymérisation est ensuite poursuivie sous balayage d'azote de 20 l/h jusqu'à obtention de la viscosité visée indiquée au tableau de caractéristiques.

Le polymère est ensuite vidangé par la vanne de fond puis refroidi dans un bac d'eau puis mis sous forme de granulés.

Les produits sont ensuite injectés sous forme de plaque 100 mm x 100 mm x 1 mm à l'aide d'une presse à injecter en utilisant une température d'injection égales à Tf + 20°C et un moule chauffé à 100°C. Les plaques non entièrement cristallisées (présence d'une recristallisation au chauffage DSC selon ISO 11357-2) sont recuites 2h sous vide à Tg + 30°C.
- La mesure de la viscosité intrinsèque ou inhérente est réalisée dans le m-crésol. La méthode est bien connue de l'homme du métier. On suit la norme ISO 307 :2007 mais en changeant le solvant (utilisation du m-crésol à la place de l'acide sulfurique, et la température (étant de 20°C), et la concentration (0.5% massique).
- La température de transition vitreuse Tg des polymères thermoplastiques utilisés est mesurée à l'aide d'un calorimètre différentiel à balayage (DSC), après un deuxième passage en chauffe, suivant la norme ISO 11357-2 :2013. La vitesse de chauffage et de refroidissement est de 20°C/min.
- La température de fusion Tf et la température de cristallisation Tc sont mesurées par DSC, après une première chauffe, selon la norme ISO 11357-3 :2013. La vitesse de chauffage et de refroidissement est de 20°C/min.
- L'enthalpie de cristallisation dudit polymère de matrice est mesurée en Calorimétrie Différentielle à Balayage (DSC) selon la norme ISO 11357-3 :2013.
- La détermination du taux de fins de chaînes amine et acide est déterminée par potentiométrie.
- Les mesures de perméabilité aux essences sont déterminées à 60°C selon une méthode gravimétrique avec le CE10: isooctane/toluène/éthanol = 45/45/10 vol.% et le CE85 : isooctane/toluène/éthanol = 7,5/7,5/85 vol.% sur les plaques ci-dessus préparées.

La perméabilité instantanée est nulle pendant la période d'induction, puis elle augmente progressivement jusqu'à une valeur à l'équilibre qui correspond à la valeur de perméabilité en régime permanent. Cette valeur obtenue en régime permanent est considérée comme étant la perméabilité du matériau.

Les résultats sont présentés dans le tableau 1 suivant.

**TABLEAU 1**

| Réf | Type essai | Structure moléculaire / Composition molaire | Tf (°C) / Tg (°C) | Viscosité inhérente (m-crésol) | Perméabilité CE10 g.mm/m².24h | Perméabilité CE85 g.mm/m².24h | NH₂ µeq/g CO₂H µeq/g |
|---|---|---|---|---|---|---|---|
| 1 | Selon l'invention | MXDT/10T 41/59 | 269/131 | 1,01 | 0,3 | 2 | 38 134 |
| 2 | Comparatif EP1741553 | 8MT/9T 48/52 | 265/125 | 1,25 | 0,5 | 3,2 | |
| 3 | Comparatif | 10I/10T 33,3/66,6 | 283/107 | 1,11 | 0,4 | 7 | |
| 4 | Comparatif EP1988113 | 10T/6T/11 42,5/42,5/15 | 269/114 | 1,25 | 0,8 | 5 | |
| 5 | Comparatif EP1988113 | 10T/6T/11 61/24,5/14,5 | 269/111 | 1,25 | 0,35 | 6 | |
| 6 | Comparatif | 10T/10I/11 64/20,5/15,5 | 265/100 | 1,15 | 2,75 | 20 | |
| 7 | Comparatif | 11/6T 35/65 | 312/100 | 1,21 | 0,65 | 6,7 | |
| 8 | Comparatif | 11/6T 50/50 | 273/79 | 1,05 | 20 | 76 | |
| 9 | Comparatif | 11/10T 33,3/66,6 | 269/85 | 1,18 | 3,1 | 13 | |

Les composés de l'invention montrent une perméabilité améliorée par rapport aux exemples comparatifs.

## Revendications

1. Structure barrière choisie parmi les bouteilles, réservoirs, conteneurs, tuyaux, récipients et films comprenant au moins une couche barrière aux carburants (1) comprenant un copolyamide MXDT/XT dans lequel :
MXDT est une unité à motif amide présent à un taux molaire allant de 5 à 45%, de préférence de 15 à 45%, plus préférentiellement de 20 à 45%, où MXD représente la m-xylylène diamine (MXD) et T l'acide téréphtalique,
XT est une unité à motif amide majoritaire présent à un taux molaire allant de 55 à 95%, de préférence de 55 à 85%, plus préférentiellement de 55 à 80%, où X est une diamine aliphatique linéaire en C9 à C18, de préférence en C9, C10, C11 et C12 et où T est l'acide téréphtalique,
ledit copolyamide présentant une température de fusion : 250°C < Tf ≤ 300°C telle que déterminée selon la norme ISO 11357-3 (2013),
- dans les unités MXDT et/ou XT, indépendamment l'une de l'autre, jusqu'à 30% en mole, par rapport à la quantité totale des diacides carboxyliques, l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités MXDT et/ou XT, indépendamment l'une de l'autre, jusqu'à 30% en mole de la MXD et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, par rapport à la quantité totale des monomères, peut être formée par des lactames ou des acides aminocarboxyliques, et
- à condition que la somme des monomères qui remplacent l'acide téréphtalique, la MXD et X ne dépasse pas une concentration de 30% en mole par rapport à la quantité totale des monomères utilisés dans le copolyamide, et
- à condition que la MXD ne soit pas totalement substituée,
ladite structure étant dépourvue de fibres de renfort, et dans laquelle une seconde couche (2) est présente, les couches (1) et (2) étant susceptibles d'adhérer l'une à l'autre, ladite couche (2) comprenant au moins un polyamide choisi parmi un polyamide aliphatique et un polyamide aromatique, en particulier un polyamide aliphatique et ladite couche barrière (1) est en contact avec le fluide.

2. Structure barrière selon la revendication 1, dans laquelle ledit copolyamide présente une température de transition vitreuse Tg ≥ 125°C, déterminée selon la norme ISO 11357-2 :2013.

3. Structure barrière selon la revendication 1 ou 2, dans laquelle X est la 1, 10 décanediamine.

4. Structure barrière selon l'une des revendications 1 à 3, dans laquelle aucun des monomères dudit copolyamide n'est substitué par une autre diamine, un autre diacide carboxylique ou un lactame.

5. Structure barrière selon l'une des revendications 1 à 4, dans laquelle ladite couche (1) comprend un modifiant choc et/ou modifiant de type core-shell.

6. Structure barrière selon l'une des revendications 1 à 5, dans laquelle ladite couche (1) comprend un stabilisant choisi parmi un stabilisant organique, un stabilisant minéral, en particulier un stabilisant à base de cuivre, et un mélange de ceux-ci.

7. Structure barrière selon l'une des revendications 1 à 6, dans laquelle ladite couche (1) comprend une charge antistatique choisie parmi le noir de carbone, le graphite, des fibres de carbone, des nanotubes de carbone, en particulier noir de carbone et nanotubes de carbone.

8. Structure barrière selon l'une des revendications 1 à 7, dans laquelle ladite couche (1) peut comprendre au moins un additif choisi parmi un antioxydant, un stabilisant à la chaleur, un absorbeur d'UV, un stabilisant à la lumière, un lubrifiant, une charge inorganique, un agent ignifugeant, un agent nucléant, un plastifiant et un colorant.

9. Structure barrière selon l'une des revendications 1 à 8, dans laquelle ledit polyamide aliphatique est issu de la polycondensation d'au moins un lactame, un acide aminocarboxylique, ou d'une diamine et d'un diacide carboxylique, la diamine étant choisi parmi une diamine aliphatique, une diamine aromatique et une diamine cycloaliphatique et le diacide carboxylique étant choisi parmi un diacide aliphatique, un diacide aromatique et un diacide cycloaliphatique, ou un mélange de ceux-ci.

10. Structure barrière selon l'une des revendications 1 à 9, dans laquelle ledit polyamide aliphatique de la couche (2) est choisi parmi le PA11, le PA12, le PA1010, le PA1012, le PA610 et le PA612.

11. Structure barrière selon l'une des revendications 1 à 10, dans laquelle un autre polyamide, différent de celui de la couche (2) peut être présent dans la couche (2).

12. Structure barrière selon l'une des revendications 1 à 11, dans laquelle un plastifiant est présent dans la couche (2).

13. Structure barrière selon l'une des revendications 1 à 12, dans laquelle un modifiant choc est présent dans la couche (2).

14. Structure barrière selon l'une des revendications 1 à 13, dans laquelle ladite couche (2) comprend un stabilisant choisi parmi un stabilisant organique, un stabilisant minéral, en particulier un stabilisant à base de cuivre, et un mélange de ceux-ci.

15. Structure barrière selon l'une des revendications 1 à 14, dans laquelle la couche (1) comprend un stabilisant organique et la couche (2) comprend un stabilisant minéral, en particulier un stabilisant à base de cuivre.

16. Structure barrière selon l'une des revendications 1 à 14, dans laquelle la couche (1) comprend un stabilisant minéral, en particulier un stabilisant à base de cuivre et la couche (2) comprend un stabilisant organique.

17. Structure barrière selon l'une des revendications 1 à 16, dans laquelle ladite couche (2) comprend une charge antistatique choisie parmi le noir de carbone, le graphite, des fibres de carbone, des nanotubes de carbone, en particulier noir de carbone et nanotubes de carbone.

18. Structure barrière selon l'une des revendications 1 à 17, dans laquelle ladite couche (2) peut comprendre au moins un additif choisi parmi un antioxydant, un stabilisant à la chaleur, un absorbeur d'UV, un stabilisant à la lumière, un lubrifiant, une charge inorganique, un agent ignifugeant, un agent nucléant et un colorant.

19. Structure barrière selon l'une des revendications 1 à 18, dans laquelle la couche (1) est une couche barrière, notamment à un fluide, ledit fluide étant un carburant, ledit carburant étant une essence, en particulier une bio essence (mélange d'essence et d'alcool, notamment de méthanol ou d'éthanol), ou du diesel en particulier le bio-diesel,
ladite couche barrière (1) étant en contact avec le fluide.

20. Structure barrière selon l'une des revendications 1 à 19, comprenant de plus une couche (3), la couche (3) étant identique à ou différente de la couche (1).

21. Structure barrière selon la revendication 20, dans laquelle la couche (3) est différente de la couche (1) et est une couche de liaison et la structure comprend de l'extérieur vers l'intérieur les couches suivantes: (2)//(3)//(1), la couche (1) étant en contact avec le fluide.

22. Structure barrière selon l'une des revendications 20 à 21, dans laquelle au moins une autre couche (4) est présente, la couche (1) étant en contact avec le fluide.

23. Structure barrière selon la revendication 22, dans laquelle la couche (4) est une couche d'EVOH.

24. Structure barrière selon l'une des revendications 22 à 23, dans laquelle la structure comprend de l'extérieur vers l'intérieur les couches suivantes: (2)//(4)//(3)//(1), la couche (1) étant en contact avec le fluide.

25. Structure barrière selon la revendication 22 ou 23, dans laquelle une couche de liaison (3'), identique à ou différente de la couche de liaison (3) est présente.

26. Structure barrière selon l'une des revendications 22 à 25, dans laquelle la structure comprend de l'extérieur vers l'intérieur les couches suivantes: (2)//(3')//(4)//(3)//(1), la couche (1) étant en contact avec le fluide.

27. Bouteilles, réservoirs, conteneurs, tuyaux et récipients fabriqués avec la structure barrière selon l'une quelconque des revendications précédentes.

28. Emballages constitués des films fabriqués avec la structure selon l'une quelconque des revendications précédentes 1 à 26.

29. Utilisation d'un copolyamide MXDT/XT, tel que défini dans la revendication 1, pour la fabrication d'une structure multicouche, comprenant au moins une couche barrière aux carburants (1) comprenant ledit copolyamide MXDT/XT.

## Patentansprüche

1. Sperrstruktur, ausgewählt aus Flaschen, Tanks, Containern, Rohren, Behältern und Folien, umfassend mindestens eine Kraftstoffsperrschicht (1), die ein Copolyamid MXDT/XT umfasst, wobei:
MXDT eine Amideinheit ist, die in einem Molverhältnis vorhanden ist, das von 5 bis 45 %, vorzugsweise 15 bis 45 %, stärker bevorzugt 20 bis 45 % reicht, wobei MXD m-Xylylendiamin (MXD) und T Terephthalsäure repräsentiert,
XT eine Amideinheit ist, die mehrheitlich in einem Molverhältnis vorliegt, das von 55 bis 95 %, vorzugsweise von 55 bis 85 %, stärker bevorzugt von 55 bis 80 % reicht, wobei X ein lineares aliphatisches C9- bis C18-, vorzugsweise C9-, C10-, C11- und C12-Diamin, ist und wobei T Terephthalsäure ist,
das Copolyamid eine Schmelztemperatur: 250 °C < Tf ≤ 300 °C aufweist, wie gemäß der Norm ISO 11357-3 (2013) bestimmt,
- in den MXDT- und/oder XT-Einheiten unabhängig voneinander bezogen auf die Gesamtmenge der Dicarbonsäuren bis zu 30 Mol-% der Terephthalsäure durch andere aromatische, aliphatische oder cycloaliphatische Dicarbonsäuren mit 6 bis 36 Kohlenstoffatomen, insbesondere 6 bis 14 Kohlenstoffatomen, ersetzt sein kann, und
- in den MXDT- und/oder XT-Einheiten unabhängig voneinander bezogen auf die Gesamtmenge der Diamine bis zu 30 Mol-% des MXD und/oder, je nachdem, des X durch andere Diamine, umfassend 4 bis 36 Kohlenstoffatome, insbesondere 6 bis 12 Kohlenstoffatome, ersetzt sein kann, und
- in dem Copolyamid bezogen auf die Gesamtmenge der Monomere nicht mehr als 30 Mol-% durch Lactame oder Aminocarbonsäuren gebildet sein können, und
- unter der Voraussetzung, dass die Summe der Monomere, die die Terephthalsäure, das MXD und X ersetzen, bezogen auf die Gesamtmenge der in dem Copolyamid verwendeten Monomere eine Konzentration von 30 Mol-% nicht überschreitet, und
- unter der Voraussetzung, dass das MXD nicht vollständig substituiert ist,
wobei die Struktur frei von Verstärkungsfasern ist und wobei eine zweite Schicht (2) vorhanden ist, wobei die Schichten (1) und (2) geeignet sind, aneinander zu haften, wobei die Schicht (2) mindestens ein Polyamid, das aus einem aliphatischen Polyamid und einem aromatischen Polyamid ausgewählt ist, insbesondere ein aliphatisches Polyamid, umfasst, und wobei die Sperrschicht (1) mit dem Fluid in Kontakt ist.

2. Sperrstruktur nach Anspruch 1, wobei das Copolyamid eine Glasübergangstemperatur Tg ≥ 125 °C, wie gemäß der Norm ISO 11357-2:2013 bestimmt, aufweist.

3. Sperrstruktur nach Anspruch 1 oder 2, wobei X 1,10-Decandiamin ist.

4. Sperrstruktur nach einem der Ansprüche 1 bis 3, wobei keines der Monomere des Copolyamids durch ein anderes Diamin, eine andere Dicarbonsäure oder ein Lactam substituiert ist.

5. Sperrstruktur nach einem der Ansprüche 1 bis 4, wobei die Schicht (1) einen Schlagzähmodifikator und/oder Kern-Schale-Modifikator umfasst.

6. Sperrstruktur nach einem der Ansprüche 1 bis 5, wobei die Schicht (1) einen Stabilisator umfasst, der aus einem organischen Stabilisator, einem mineralischen Stabilisator, insbesondere einem Stabilisator auf Kupferbasis, und einer Mischung davon ausgewählt ist.

7. Sperrstruktur nach einem der Ansprüche 1 bis 6, wobei die Schicht (1) einen antistatischen Füllstoff umfasst, der aus Ruß, Graphit, Kohlenstofffasern, Kohlenstoffnanoröhrchen, insbesondere Ruß und Kohlenstoffnanoröhrchen, ausgewählt ist.

8. Sperrstruktur nach einem der Ansprüche 1 bis 7, wobei die Schicht (1) mindestens einen Zusatzstoff umfassen kann, der aus einem Antioxidans, einem Wärmestabilisator, einem UV-Absorber, einem Lichtstabilisator, einem Schmiermittel, einem anorganischen Füllstoff, einem Flammschutzmittel, einem Nukleierungsmittel, einem Weichmacher und einem Farbstoff ausgewählt ist.

9. Sperrstruktur nach einem der Ansprüche 1 bis 8, wobei das aliphatische Polyamid aus der Polykondensation von mindestens einem Lactam, einer Aminocarbonsäure oder einem Diamin und einer Dicarbonsäure stammt, wobei das Diamin aus einem aliphatischen Diamin, einem aromatischen Diamin und einem cycloaliphatischen Diamin ausgewählt ist und die Dicarbonsäure aus einer aliphatischen Dicarbonsäure, einer aromatischen Dicarbonsäure und einer cycloaliphatischen Dicarbonsäure oder einer Mischung davon ausgewählt ist.

10. Sperrstruktur nach einem der Ansprüche 1 bis 9, wobei das aliphatische Polyamid der Schicht (2) aus PA11, PA12, PA1010, PA1012, PA610 und PA612 ausgewählt ist.

11. Sperrstruktur nach einem der Ansprüche 1 bis 10, wobei ein anderes Polyamid, das sich von dem der Schicht (2) unterscheidet, in der Schicht (2) vorhanden sein kann.

12. Sperrstruktur nach einem der Ansprüche 1 bis 11, wobei in der Schicht (2) ein Weichmacher vorhanden ist.

13. Sperrstruktur nach einem der Ansprüche 1 bis 12, wobei in der Schicht (2) ein Schlagzähmodifikator vorhanden ist.

14. Sperrstruktur nach einem der Ansprüche 1 bis 13, wobei die Schicht (2) einen Stabilisator umfasst, der aus einem organischen Stabilisator, einem mineralischen Stabilisator, insbesondere einem Stabilisator auf Kupferbasis, und einer Mischung davon ausgewählt ist.

15. Sperrstruktur nach einem der Ansprüche 1 bis 14, wobei die Schicht (1) einen organischen Stabilisator und die Schicht (2) einen mineralischen Stabilisator, insbesondere einen Stabilisator auf Kupferbasis, umfasst.

16. Sperrstruktur nach einem der Ansprüche 1 bis 14, wobei die Schicht (1) einen mineralischen Stabilisator, insbesondere einen Stabilisator auf Kupferbasis, umfasst und die Schicht (2) einen organischen Stabilisator umfasst.

17. Sperrstruktur nach einem der Ansprüche 1 bis 16, wobei die Schicht (2) einen antistatischen Füllstoff umfasst, der aus Ruß, Graphit, Kohlenstofffasern, Kohlenstoffnanoröhrchen, insbesondere Ruß und Kohlenstoffnanoröhrchen, ausgewählt ist.

18. Sperrstruktur nach einem der Ansprüche 1 bis 17, wobei die Schicht (2) mindestens einen Zusatzstoff umfassen kann, der aus einem Antioxidans, einem Wärmestabilisator, einem UV-Absorber, einem Lichtstabilisator, einem Schmiermittel, einem anorganischen Füllstoff, einem Flammschutzmittel, einem Nukleierungsmittel und einem Farbstoff ausgewählt ist.

19. Sperrstruktur nach einem der Ansprüche 1 bis 18, wobei die Schicht (1) eine Sperrschicht ist, besonders gegen ein Fluid, wobei das Fluid ein Kraftstoff ist, wobei der Kraftstoff ein Benzin, insbesondere ein Bio-Benzin (Mischung aus Benzin und Alkohol, besonders Methanol oder Ethanol), oder Diesel, insbesondere Bio-Diesel, ist, wobei die Sperrschicht (1) mit dem Fluid in Kontakt ist.

20. Sperrstruktur nach einem der Ansprüche 1 bis 19, die zusätzlich eine Schicht (3) umfasst, wobei die Schicht (3) mit der Schicht (1) identisch oder von ihr verschieden ist.

21. Sperrstruktur nach Anspruch 20, wobei die Schicht (3) von der Schicht (1) verschieden ist und eine Verbindungsschicht ist und die Struktur von außen nach innen die folgenden Schichten umfasst: (2)//(3)//(1), wobei die Schicht (1) mit dem Fluid in Kontakt ist.

22. Sperrstruktur nach einem der Ansprüche 20 bis 21, bei der mindestens eine andere Schicht (4) vorhanden ist, wobei die Schicht (1) mit dem Fluid in Kontakt ist.

23. Sperrstruktur nach Anspruch 22, wobei die Schicht (4) eine Schicht aus EVOH ist.

24. Sperrstruktur nach einem der Ansprüche 22 bis 23, wobei die Struktur von außen nach innen die folgenden Schichten umfasst: (2)//(4)//(3)//(1), wobei die Schicht (1) mit dem Fluid in Kontakt ist.

25. Sperrstruktur nach Anspruch 22 oder 23, wobei eine Verbindungsschicht (3'), mit der Verbindungsschicht (3) identisch oder von ihr verschieden, vorhanden ist.

26. Sperrstruktur nach einem der Ansprüche 22 bis 25, wobei die Struktur von außen nach innen die folgenden Schichten umfasst: (2)//(3')//(4)//(3)//(1), wobei die Schicht (1) mit dem Fluid in Kontakt ist.

27. Flaschen, Tanks, Container, Rohre und Behälter, die mit der Sperrstruktur nach einem der vorstehenden Ansprüche hergestellt sind.

28. Verpackungen, die aus den Folien bestehen, die mit der Struktur nach einem der vorstehenden Ansprüche 1 bis 26 hergestellt sind.

29. Verwendung eines Copolyamids MXDT/XT, wie in Anspruch 1 definiert, zur Herstellung einer Mehrschichtstruktur, umfassend mindestens eine Kraftstoffsperrschicht (1), die das Copolyamid MXDT/XT umfasst.

## Claims

1. A barrier structure selected from bottles, tanks, containers, pipes, recipients and films comprising at least one fuel barrier layer (1) comprising an MXDT/XT copolyamide wherein:
MXDT is a unit with an amide motif present at a molar level ranging from 5 to 45%, preferably from 15 to 45%, more preferentially from 20 to 45%, where MXD represents m-xylylene diamine (MXD) and T is terephthalic acid,
XT is a unit with majority amide motif present at a molar level ranging from 55 to 95%, preferably from 55 to 85%, more preferentially from 55 to 80%, where X is a C9 to C18 linear aliphatic diamine, preferably C9, C10, C11 or C12 and where T is terephthalic acid,
said copolyamide having a melting temperature: 250°C < Tₘ ≤ 300°C as determined according to ISO 11357-3 (2013),
- in the MXDT and/or XT units, independently of one another, up to 30 mol%, relative to the total amount of the dicarboxylic acids, the terephthalic acid may be replaced by other aromatic, aliphatic or cycloaliphatic dicarboxylic acids having 6 to 36 carbon atoms, in particular 6 to 14 carbon atoms, and
- in the MXDT and/or XT units, independently of one another, up to 30 mol% of the MXD and/or according to the case of X, relative to the total amount of diamines, may be replaced by other diamines having 4 to 36 carbon atoms, in particular 6 to 12 carbon atoms, and
- in the copolyamide, not more than 30 mol%, relative to the total quantity of the monomers, can be formed by lactams or aminocarboxylic acids, and
- provided that the sum of the monomers that replace the terephthalic acid, the MXD and X does not exceed a concentration of 30 mol% relative to the total quantity of monomers used in the copolyamide, and
- provided that the MXD is not fully substituted,
said structure being devoid of reinforcing fibers, and wherein a second layer (2) is present, layers (1) and (2) being capable of adhering to each other, said layer (2) comprising at least one polyamide chosen from an aliphatic polyamide and an aromatic polyamide, in particular an aliphatic polyamide and said barrier layer (1) is in contact with the fluid.

2. The barrier structure according to claim 1, wherein said copolyamide has a glass transition temperature Tg ≥ 125°C, determined according to ISO 11357-2:2013.

3. The barrier structure according to claim 1 or 2, wherein X is 1,10 decanediamine.

4. The barrier structure according to one of claims 1 to 3, wherein none of the monomers of said copolyamide is substituted with another diamine, another carboxylic diacid, or a lactam.

5. The barrier structure according to one of claims 1 to 4, wherein said layer (1) comprises an impact modifier and/or core-shell modifier.

6. The barrier structure according to one of claims 1 to 5, wherein said layer (1) comprises a stabilizer selected from an organic stabilizer, a mineral stabilizer, in particular a copper-based stabilizer, and a mixture thereof.

7. The barrier structure according to one of claims 1 to 6, wherein said layer (1) comprises an antistatic filler selected from carbon black, graphite, carbon fibers, carbon nanotubes, in particular carbon black and carbon nanotubes.

8. The barrier structure according to one of claims 1 to 7, wherein said layer (1) may comprise at least one additive selected from an antioxidant, a heat stabilizer, a UV absorber, a light stabilizer, a lubricant, an inorganic filler, a flame retardant, a nucleating agent, a plasticizer, and a dye.

9. The barrier structure according to one of claims 1 to 8, wherein said aliphatic polyamide is derived from the polycondensation of at least one lactam, an aminocarboxylic acid, or a diamine and a dicarboxylic acid, the diamine being selected from an aliphatic diamine, an aromatic diamine, and a cycloaliphatic diamine, and the dicarboxylic acid being selected from an aliphatic diacid, an aromatic di acid, and a cyclo-aliphatic diacid, or a mixture thereof.

10. The barrier structure according to one of claims 1 to 9, wherein said aliphatic polyamide of layer (2) is selected from PA11, PA12, PA1010, PA1012, PA610 and PA612.

11. The barrier structure according to one of claims 1 to 10, wherein another polyamide, different from that of layer (2) may be present in layer (2).

12. The barrier structure according to one of claims 1 to 11, wherein a plasticizer is present in layer (2).

13. The barrier structure according to one of claims 1 to 12, wherein an impact modifier is present in layer (2).

14. The barrier structure according to one of claims 1 to 13, wherein said layer (2) comprises a stabilizer selected from an organic stabilizer, amineral stabilizer, in particular a copper-based stabilizer, and a mixture thereof.

15. The barrier structure according to one of claims 1 to 14, wherein layer (1) comprises an organic stabilizer and layer (2) comprises a mineral stabilizer, in particular a copper-based stabilizer.

16. The barrier structure according to one of claims 1 to 14, wherein layer (1) comprises a a mineral stabilizer, in particular a copper-based stabilizer and layer (2) comprises an organic stabilizer.

17. The barrier structure according to one of claims 1 to 16, wherein said layer (2) comprises an antistatic filler selected from carbon black, graphite, carbon fibers, carbon nanotubes, in particular carbon black and carbon nanotubes.

18. The barrier structure according to one of claims 1 to 17, wherein said layer (2) may comprise at least one additive selected from an antioxidant, a heat stabilizer, a UV absorber, a light stabilizer, a lubricant, an inorganic filler, a flame retardant, a nucleating agent, and a dye.

19. The barrier structure according to one of claims 1 to 18, in which layer (1) is a barrier layer, in particular to a fluid, said fluid being a fuel, said fuel being a gasoline, in particular a bio-gasoline (mixture of gasoline and alcohol, in particular methanol or ethanol), or diesel, in particular bio-diesel, said barrier layer (1) being in contact with the fluid.

20. The barrier structure according to one of claims 1 to 19, further comprising a layer (3), layer (3) being identical to or different from layer (1).

21. The barrier structure according to claim 20, wherein layer (3) is different from layer (1) and is a bonding layer and the structure comprises, from outside to inside, the following layers: (2)//(3)//(1), layer (1) being in contact with the fluid.

22. The barrier structure according to one of claims 20 to 21, wherein at least one further layer (4) is present, layer (1) being in contact with the fluid.

23. The barrier structure according to claim 22, wherein layer (4) is an EVOH layer.

24. The barrier structure according to one of claims 22 to 23, wherein the structure comprises, from outside to inside, the following layers: (2)//(4)//(3)//(1), layer (1) being in contact with the fluid.

25. The barrier structure according to claim 22 or 23, wherein a bonding layer (3'), identical to or different from bonding layer (3) is present.

26. The barrier structure according to one of claims 22 to 25, wherein the structure comprises, from outside to inside, the following layers: (2)//(3')//(4)//(3)//(1), layer (1) being in contact with the fluid.

27. Bottles, tanks, containers, pipes and recipients made with the barrier structure according to any of the preceding claims.

28. Packages consisting of films made with the structure according to any of the preceding claims 1 to 26.

29. The use of an MXDT/XT copolyamide, as defined in claim 1, for the manufacture of a multilayer structure, comprising at least one fuel barrier layer (1) comprising said MXDT/XT copolyamide.
